# EUROPEAN PATENT APPLICATION

(11) **EP 1 116 635 A1**
(43) Date of publication of application: **18.07.2001**
(21) Application number: 00850003.5
(22) Date of filing: 13.01.2000
(51) Int. Cl.: B61D 39/00, B60J 7/06

(54) **An end piece in a cover arrangement for goods-transporting means**

(71) Applicant: Grandwaggon Aktiebolag, 831 52 Östersund (SE)
(72) Inventor: Olsson, Anders, 83433 Brunflo (SE)
(74) Representative: Ellner, Lars O.

(57) **Abstract**

An end piece for a cover arrangement (1) for covering a goods-transporting means. The cover arrangement comprises two rigid end walls (6), a plurality of rigid cover arches (8), which extend between the long sides of the goods-transporting means and which each are connected at their ends to an end piece (2), and a cover cloth (7) which is supported by the cover arches (8) to form a covered loading space under the cover cloth (7). The end pieces (2) are arranged in a displaceable manner along the long sides of the transporting means. A T-shaped rail (17) is arranged along each long side of the transporting means. The end piece (2) comprises a substantially triangular plate (15) in each corner of which a roll (16) is rotatably mounted, said rolls (16) being in engagement with the opposite, free long side edges of the rail (17). The end pieces (2) are alternately arranged on the rail, such that one end piece with a roll (16) in its uppermost portion (19) is positioned between two end pieces with two rolls (16) in their uppermost portion (19), and vice versa.

## Description

### Technical Field

The present invention relates to an end piece for a cover arrangement for covering a goods-transporting means, said cover arrangement comprising two rigid end walls which are attached to the short sides of the transporting means, a plurality of rigid cover arches, which extend between the long sides of the transporting means and which each are connected at their ends to an end piece, and a cover cloth which is supported by the cover arches to form a covered loading space under the cover cloth, the end pieces being arranged in a displaceable manner along the long sides of the transporting means and the end walls comprising locking means for releasable locking of the outermost cover arches each in abutment against an end wall. More specifically, the transporting means is a vehicle, for instance, a railway waggon, lorry, trailer, pick-up and the like, or alternatively a ship, such as a general cargo vessel, barge, work boat and the like. The invention also relates to a goods-transporting means.

### Background Art

When transporting goods, it is usually necessary to protect the goods against the environment, for instance rain, snow and wind, by covering the same. Consequently, there are different types of cover arrangements for railway waggons.

The most common type is a steel-sheet superstructure which is made of, for instance, aluminium and which has two longitudinally displaceable side doors for loading and unloading the goods. This arrangement yields a maximum opening for loading which is almost half the length of the waggon. However, this makes it difficult to load the loading space with goods of great length. A common example is parcels of timber, of which three are often accommodated in the longitudinal direction of the waggon. Since only half the length of the waggon is available at a time, it is very difficult to load the parcels of timber that are to be positioned in the centre of the waggon.

Another type of cover arrangement, in which one has tried to solve the above-mentioned loading problem, comprises a cover cloth which is supported by cover arches extending between the long sides of the waggon. The cover arches are displaceable in the longitudinal direction of the waggon. By arranging sufficiently narrow or few arches, more than half the space can be opened for loading by pushing the arches towards one end of the waggon. For instance, at least 2/3 preferably constitute the opening, for transporting the above-mentioned type of parcels of timber. The stress exerted on the cover arches by the weight of the cover cloth and external forces acting on the cover cloth, for instance the relative wind, as well as the sagging of the cover cloth between two arches determine the number of arches and their dimensions.

Swedish patent publication 9702071-3 discloses a cover arrangement of the last-mentioned type. Although in most situations this cover arrangement functions well, there is a pronounced need to further increase the openable space to facilitate loading and unloading of goods of very great length and reduce the risk of damaging the cover arches when handling the goods. Each arch is supported by a pair of rectangular arch carriage pieces or end pieces of a width dimensioned for the stress to which the end piece will be exposed by the arch. The opening of the waggon is limited by the width of the end pieces.

### Objects of the Invention

An object of the present invention is to provide an end piece for a cover arrangement for a railway waggon, said end piece permitting a considerably greater opening length while maintaining a good manageability when opening/closing.

Yet another object of the invention is to provide an end piece which offers a lower cost of production.

### Summary of the Invention

According to the invention, these objects are achieved by means of an end piece which is of the type mentioned by way of introduction and characterised in that a T-shaped rail is arranged along each long side of the transporting means, that the end piece comprises a substantially triangular plate in each corner of which a roll is rotatably mounted, said rolls being in engagement with the opposite, free long side edges of the rail, and that the end pieces are alternately arranged on the rail, such that one end piece with a roll in its uppermost portion is positioned between two end pieces with two rolls in their uppermost portion, and vice versa.

Further developments of the invention appear from the features which are stated in the dependent claims.

### Brief Description of the Drawings

A preferred embodiment of the invention will now be described by way of example and with reference to the accompanying drawings, in which
Fig. 1 is a side view of an end of a railway waggon with a cover arrangement, which is provided with end pieces according to the invention, in a pushed-together state and without cover cloth for the sake of clarity;
Fig. 2 is a view similar to the one in Fig. 1 showing the cover arrangement in an extended state, the cover cloth being indicated;
Fig. 3 is a view on a larger scale of the lower, left-hand part of Fig. 1;
Fig. 4 is a perspective view of a preferred embodiment of the end piece according to the invention, without anchoring tongue for the cover cloth and without attachment for the cover arch for the sake of clarity; and
Fig. 5 is a partial section of one long side edge of the waggon showing the end piece according to Fig. 4 when mounted on an associated rail.

### Description of an Embodiment of the Invention

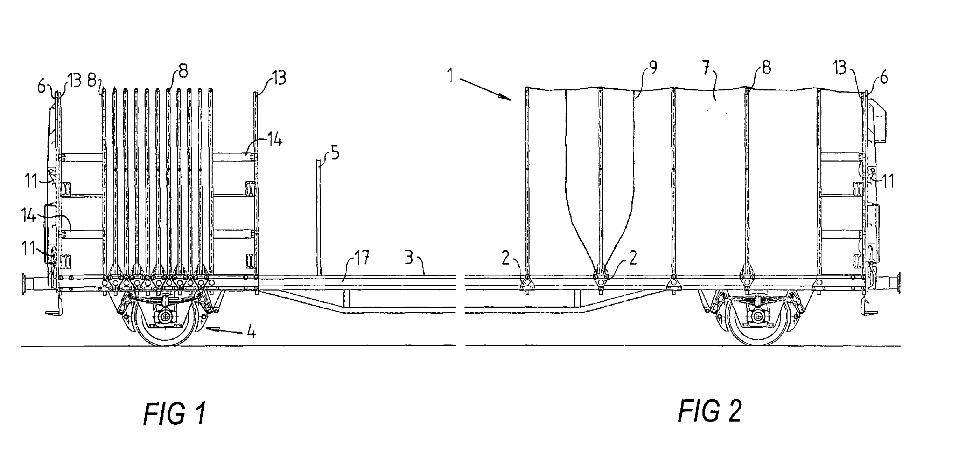

Figs 1 and 2 illustrate a waggon having a cover arrangement 1, which is provided with a number of end pieces or arch carriage pieces 2 according to the invention. In a conventional basic design, the waggon comprises a platform 3, two wheel assemblies 4 with axles and axle suspensions and load supports 5 (of which only one is indicated). The load supports 5 are posts which are equidistantly spaced from each other along the long sides of the platform 3 and fixed to the platform 3. Their purpose is to prevent the load from sliding off the platform or damaging the cover arrangement 1.

In accordance with the embodiment shown, the arrangement comprises two end walls 6, a cover cloth 7, cover arches 8 and members 9 of optional type for extending the cover cloth between the arches (as schematically shown in Fig. 2) or for supporting an adjacent arch.

The end walls 6 are rigid and made up mostly of steel parts. The end walls are fixedly connected to the waggon at either short end thereof and have the same width as the platform 3. Each end wall 6 comprises locking means 11 for releasable locking of the outermost arch or the end arch 13 into sealing abutment against the end wall 6.

Each cover arch 8, except the end arches 13, comprises a tube which extends arcuately from one long side of the waggon to its other long side. The tube is bent in several places to form a roof portion of a suitable shape. Each end arch 13 is fixedly connected to the adjacent cover arch 8 by means of rigid crossbars 14.

The cover arches 8 support the cover cloth 7, such that a covered, loadable space forms under the arches 8, and more specifically between the arches and the platform 3. The cover cloth is fixed to the arches by means of conventional clamps, which are attached to the cover cloth and fitted round the arches. For more details, reference is made to above-mentioned Swedish patent specification 9702071-3.

The distance between two adjacent or juxtaposed arches 8 is as great as possible for the number of arches required for the entire waggon to be as small as possible. This is above all important in view of the wish to provide a maximum opening in a waggon with a cover arrangement. However, it is also important when taking the cost of the cover arrangement in consideration.

The factor limiting the size of the opening is not the diameter of the cover arches but the width of the end pieces 2, by means of which the arches are attached in a displaceable manner to the waggon. For strength reasons, the width of the end pieces is substantially greater than the diameter of the arches and the end pieces are conventionally rectangular and have a pair of upper rolls and a pair of lower rolls, which are rotatably mounted and arranged in the corners of a quadrangle. The rolls abut against opposite sides of a rail, which is fixed to the respective long side edges of the waggon, see e.g. European patent application EP 609,655 A1.

To permit packing of the cover arches closer to each other, the most obvious solution to the one skilled in the art would be to reduce the width of the end pieces and fortify their construction by increasing the material thickness and/or using a stronger material. However, it has been found that this does not work as the mutual distance between the wheels in each pair is reduced to the same extent, which in turn makes the rail pinch the pairs of wheels when a load is applied to the arch. The cover cloth between the arches makes the arches tend to incline, and consequently short end pieces results in great forces being exerted on the rolls, which in turn results in a high degree of friction, thus making it difficult to move the arch-supporting end pieces.

The inventive idea is based on the knowledge that end pieces of triangular shape make it possible to pack the cover arches closer without any risk of friction problems arising when a load is applied to the arches and without appreciably affecting the strength of the end pieces. By arranging every other triangular end piece with the base turned upwards and every other with the top turned upwards, a considerably shorter length of the pushed-together "arch package" may be obtained. In practical tests, this has been found to work and the length of the pushed-together "arch package" has been reduced by about 25 %, which results in a correspondingly greater opening for loading and unloading.

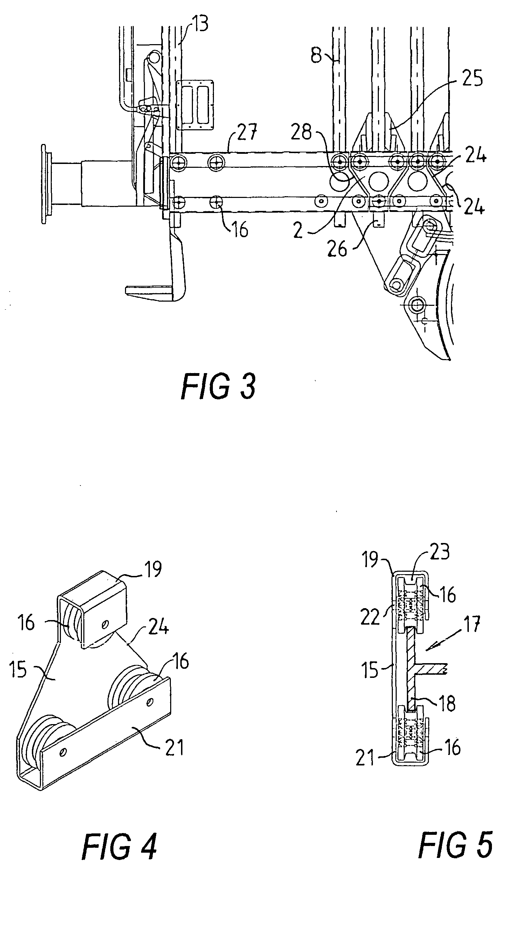

Reference is now made to Figs 3-5, which illustrate the inventive end piece in more detail.

The end piece 2 comprises a substantially triangular plate 15, in the respective corners of which a roll 16 is rotatably mounted. The end piece is arranged in a displaceable manner along a rail 17 which is fixed to the long side of the waggon, essentially on a level with its platform 3 (see Fig. 1). There is a rail at each long side and the rail is a T-section, whose web is attached to the waggon and whose flange 18 is oriented in the vertical direction and supports the end piece 2. The rolls 16 are in rolling engagement with the opposite, free long side edges of the rail flange 18, i.e. one roll at one long side edge and two rolls at the other edge.

The plate 15 is preferably bent in a U in its uppermost portion 19 and its lowermost portion 21. It is also preferred that the bent portions 19 and 21 should be rectangular in a plane which is parallel with the plane of the plate 15 (cf. Fig. 4). The rolls are rotatably mounted on a respective one of axles 22 which extend across the respective U-bends.

The rolls 16 are positioned in each corner of an imaginary triangle, which is substantially equilateral to enhance the strength of the end piece. Furthermore, each roll has a central, annular groove 23 to receive the outermost long side edge portion of the associated rail flange 18, as illustrated in Fig. 5.

The end pieces 2 are alternately arranged on the rail 17, that is one end piece with a roll 16 in its uppermost portion 19 is positioned between two end pieces with two rolls in their uppermost portion, and vice versa, as clearly appears from Fig. 2. Moreover, mutually facing side edges 24 of adjacent or juxtaposed end pieces 2 are complementary to each other, as appears for instance from Fig. 3. This also results in the effect that the end pieces stabilise each other when the cover arches are pushed together into an "arch package".

It is to be noted that Figs 4 and 5 only show the carriage structure of the end piece 2 and not the complete end piece. The function of each end piece is, on the one hand, to support one end of a cover arch, for which purpose an attachment 25 is arranged on the uppermost portion 19 of the end piece and, on the other, to anchor the long side edge of the cover cloth 7. In view of the last-mentioned purpose, a tongue 26 is arranged to project from the lowermost portion 21 of the end piece, to which portion the cover cloth is fixed, preferably by means of a rivet or the like (not shown). In the cases where the end piece is positioned so that the uppermost portion 19 comprises two rolls, i.e. the base of the imaginary triangle being directed upwards, a pair of attachment means can also, if desired, be arranged for the above-mentioned members 9 extending the cover cloth on the uppermost portion of the end piece on each side of the arch attachment 25 (cf. Fig. 2).

As mentioned in the beginning of the description in connection with Figs 1 and 2, each end arch 13 is fixedly connected to the adjacent cover arch 8 by means of rigid crossbars 14. These two arches 8, 13 are attached to a common, outermost end piece 27. Therefore, this end piece is substantially rectangular and provided with more than two rolls in its uppermost and lowermost, U-bent portions 19 and 21 (see Fig. 3). The shape of the side edge 28 of the end piece 27, which side edge is directed towards the centre or middle of the waggon, is preferably complementary to that of the side edge 24, facing said side edge 28, of the adjacent end piece 2 to achieve the previously discussed stabilising effect on the end pieces.

In the above description of a preferred embodiment of the invention, the shape of the end piece has been defined as substantially triangular. In this connection, the word "triangular" means triangle-shaped, truncatedly triangle-shaped, rhombic and the like and the mutual positioning of the rolls is determined by strength and functional aspects. It goes without saying that is also possible, if desired for special reasons, to exchange the rolls for sliding members or the like.

The triangular shape of the end pieces results in a reduction of their cost of production cost since only three rolls are used instead of four rolls, as in traditional constructions.

Finally, in the described embodiment use has been made of a waggon as an example of a goods-transporting means. However, the transporting means can be an optional vehicle, such as a lorry, trailer, pick-up and the like, or a ship, such as a general cargo vessel, barge, work boat and the like. The inventive idea may, of course, also be applied to a stationary cover arrangement, if desired, for instance a storage compartment.

## Claims

1. An end piece for a cover arrangement (1) for covering a goods-transporting means, said cover arrangement comprising two rigid end walls (6) which are attached to the short sides of the transporting means, a plurality of rigid cover arches (8), which extend between the long sides of the transporting means and which each are connected at their ends to an end piece (2), and a cover cloth (7) which is supported by the cover arches (8) to form a covered loading space under the cover cloth (7), the end pieces (2) being arranged in a displaceable manner along the long sides of the transporting means and the end walls (6) comprising locking means (11) for releasable locking of the outermost cover arches (13) each in abutment against an end wall (6), **characterised** in that a T-shaped rail (17) is arranged along each long side of the transporting means, that the end piece (2) comprises a substantially triangular plate (15) in each corner of which a roll (16) is rotatably mounted, said rolls (16) being in engagement with the opposite, free long side edges of the rail (17), and that the end pieces (2) are alternately arranged on the rail, such that one end piece with a roll (16) in its uppermost portion (19) is positioned between two end pieces with two rolls (16) in their uppermost portion (19) and vice versa.

2. An end piece as claimed in claim 1, **characterised** in that mutually facing side edges (24) of adjacent end pieces (2) are complementary to each other.

3. An end piece as claimed in claim 1 or 2, **characterised** in that said plate (15) is U-bent in its uppermost (19) and lowermost (21) portions, that the rolls (16) are rotatably mounted on a respective one of axles (22) which extend across an associated U-bend, and that the U-bent portions are rectangular in a plane which is parallel with the plane of the plate (15).

4. An end piece as claimed in any one of claims 1-3, **characterised** in that the rolls (16) in each end piece (2) are arranged in a respective corner of an equilateral triangle.

5. An end piece as claimed in any one of the preceding claims, **characterised** in that each roll (16) has an annular groove (23) for receiving the outermost long side edge portion of the associated rail (17).

6. An end piece as claimed in any one of the preceding claims, **characterised** by a tongue (26) which projects from the lowermost portion of said plate (15) to anchor the long side edge of the cover cloth (7), an attachment (25) at the uppermost portion (19) of the plate (15) for the associated cover arch (8) and, in the case where the uppermost portion of the plate has two rolls (16), a pair of attachment means for members (9) extending the cover cloth (7), said members (9) being arranged on both sides of the cover arch (8).

7. An end piece as claimed in any one of the preceding claims, **characterised** in that the outermost end pieces (27) are integrated with a longitudinally elongate plate arrangement, which is provided with rolls (16) and whose uppermost and lowermost portions are U-bent, that each outermost end piece (2) supports the two outermost cover arches (8, 13), and that the shape of the side edge (28) of each outermost end piece (27), which side edge is directed towards the centre of the transporting means, is complementary to that of the side edge (24), facing said side edge (28), of the adjacent end piece (2).

8. A goods-transporting means, **characterised** in that it comprises a cover arrangement with end pieces according to any one of the preceding claims.
